# EUROPEAN PATENT APPLICATION

(11) **EP 4 191 410 A1**
(43) Date of publication of application: **07.06.2023**
(21) Application number: 22195789.7
(22) Date of filing: 15.09.2022
(51) Int. Cl.: G06F 9/455, G06F 9/445

(54) **INFORMATION PROCESSING APPARATUS, METHOD, COMPUTER PROGRAM, AND RECORDING MEDIUM**

(30) Priority: 02.12.2021 JP 2021196182
(71) Applicant: Ricoh Company, Ltd., Tokyo 143-8555 (JP)
(72) Inventor: Izumi, Naotaka, Tokyo, 143-8555 (JP)
(74) Representative: Marks & Clerk LLP

(57) **Abstract**

An information processing apparatus (110) includes a means for executing (330, 220, 230, 240) an application having a WebView function, and an operating system supporting a programming language other than a specific programming language, a means for communicating (310, 210, 250) with a server (120) that provides an application programming interface (API) that is based on the specific programming language, and a means for reading (330, 312, 210) native implementation of the application in response to the means for communicating (310, 210, 250) receiving a response from the API.

## Description

### BACKGROUND

### Technical Field

Embodiments of the present disclosure relate to an information processing apparatus, a method, a computer program, and a recording medium.

### Related Art

With the development of information processing technology in recent years, various cloud services have been developed. Cloud services are widely used, not only in personal computer terminals but also in various information processing apparatuses such as smartphone terminals and multifunction peripherals (MFPs).

However, such a cloud service is not available with an information processing apparatus that uses an operating system (OS) on which only a browser that does not support a Web application programming interface (API) used for using cloud services is installed. For example, in a case where a JAVASCRIPT-based Web API is used, the Web API is available with an information processing apparatus of which an OS is WINDOWS, but is not available with an information processing apparatus (such as a smartphone terminal) installed with an OS such as ANDROID or IOS.

In this regard, Japanese Unexamined Patent Application Publication No. 2014-215672 discloses a technique of creating a virtual Web environment in a computer and converting a function that is not available with a Web browser into an alternative Web API that operates locally. According to Japanese Unexamined Patent Application Publication No. 2014-215672, the processing of the web API can be alternatively executed without depending on an OS or a device.

However, in a method according to Japanese Unexamined Patent Application Publication No. 2014-215672, a virtual Web server is necessary, and the method does not work with an API that is not supported by the virtual Web server. Due to this reason, further improvement in convenience has been demanded.

### SUMMARY

An embodiment of the present disclosure includes an information processing apparatus including a means for executing an application having a WebView function, and an operating system supporting a programming language other than a specific programming language, a means for communicating with a server that provides an application programming interface (API) that is based on the specific programming language, and a means for reading native implementation of the application in response to the means for communicating receiving a response from the API.

An embodiment of the present disclosure includes a method performed by an information processing apparatus on which an application including a WebView function and an operating system (OS) supporting a programing language other than a specific programing language are installed. The method includes receiving a response from an API that is based on the specific programming language unsupported by the OS that is installed, and reading native implementation of the application in response to receiving the response.

An embodiment of the present disclosure includes a computer program having a WebView function, when being executed by a computer system installed with an operating system (OS) supporting a programming language other than a specific programing language, causes the computer system to perform a method. The method includes receiving a response from an API that is based on the specific programming language unsupported by the OS that is installed and reading native implementation of the program in response to receiving the response.

An embodiment of the present disclosure includes a recording medium storing an application having a WebView function, when being executed by a computer system installed with an operating system (OS) supporting a programming language other than a specific programing language, causes the computer system to perform a method. The method includes receiving a response from an API that is based on the specific programming language unsupported by the OS that is installed, and reading native implementation of the application in response to receiving the response.

According to an embodiment of the present disclosure, an information processing apparatus, a method, and a program that can use an API without depending on an OS or a browser are provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a hardware configuration of an entire system according to an exemplary embodiment of the present disclosure;
FIG. 2 is a block diagram illustrating a hardware configuration of an information processing apparatus according to the exemplary embodiment of the present disclosure;
FIG. 3 is a block diagram illustrating execution of a Web application programming interface (API) in a general-purpose information processing apparatus according to a related art;
FIG. 4 is a schematic block diagram illustrating functions implemented by software in the information processing apparatus according to the exemplary embodiment of the present disclosure;
FIG. 5 is a flowchart illustrating a process in which the information processing apparatus executes a Web API according to the exemplary embodiment of the present disclosure;
FIG. 6 is a flowchart illustrating a process in which the information processing apparatus executes the Web API in a specific example, according to the exemplary embodiment of the present disclosure; and
FIG. 7A and FIG. 7B are diagrams each illustrating an example of a display screen in the specific example according to the exemplary embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Although embodiments of the disclosure are described below, embodiments of the present invention are not limited to the embodiments described below. In the drawings referred below, the same reference codes are used for the common elements, and the descriptions thereof are omitted as appropriate.

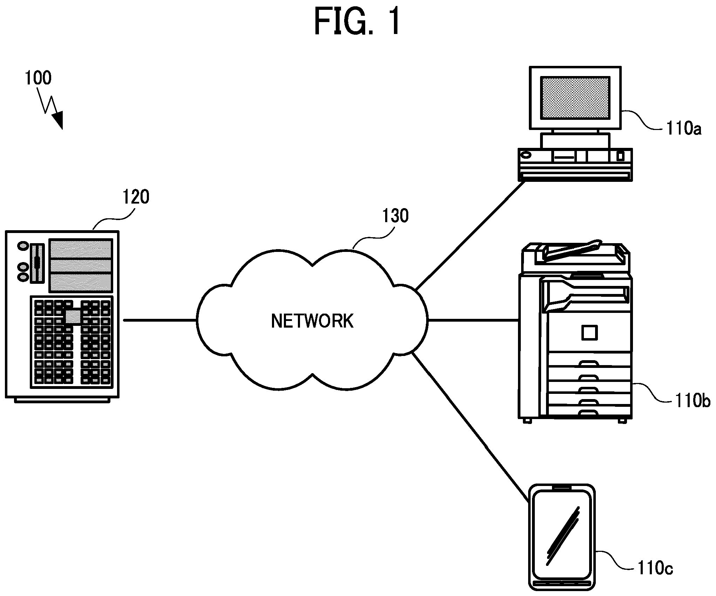

FIG. 1 is a schematic diagram illustrating a hardware configuration of an entire system 100 according to an embodiment. FIG. 1 illustrates, as an example, an environment in which an information processing apparatus 110 including a personal computer (PC) terminal 110a, an image forming apparatus 110b, and a smartphone terminal 110c and a server 120 are connected to each other via a network 130 such as the Internet or a local area network (LAN). The number of information processing apparatuses 110 is not limited to that illustrated in FIG. 1, and the number of information processing apparatuses 110 included in the system 100 is not limited. A method of connecting each of the information processing apparatus 110 and the server 120 to the network 130 may be wired or wireless.

The information processing apparatus 110 is, for example, an apparatus such as the PC terminal 110a, the image forming apparatus 110b, or the smartphone terminal 110c, and can execute a predetermined calculation, processing, or a job by being operated by a user.

The server 120 is an apparatus that provides various services to the information processing apparatus 110. The server 120 according to the present embodiment can provide a Web Application Programming Interface (API) to the information processing apparatus 110. In addition, the server 120 can provide a program to the information processing apparatus 110, manage an account of a user who uses a service, perform authentication, and manage contract content, for example. The server 120 according to the present embodiment may provide the above-described various services by one apparatus or by a plurality of apparatuses.

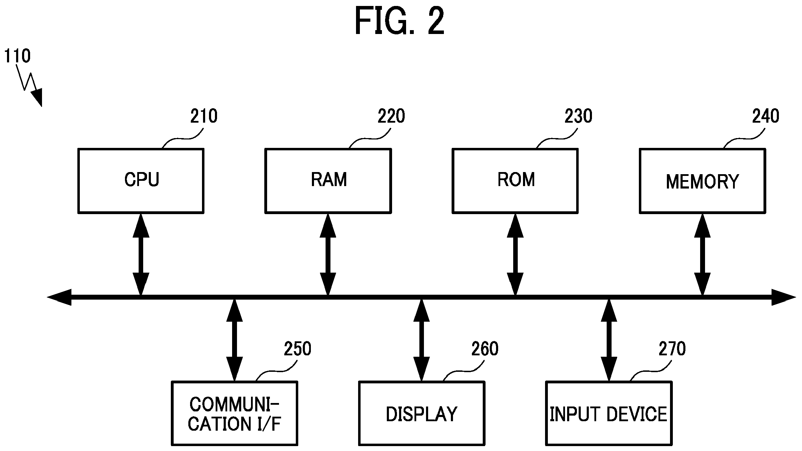

A description is given below of a hardware configuration of the information processing apparatus 110. FIG. 2 is a block diagram illustrating a hardware configuration of the information processing apparatus 110 according to the present embodiment. The information processing apparatus 110 includes a central processing unit (CPU) 210, a random access memory (RAM) 220, a read only memory (ROM) 230, a memory 240, a communication interface (I/F) 250, a display 260, and an input device 270 that are connected to each other through a bus.

The CPU 210 executes a program for controlling operation of the information processing apparatus 110 to perform various processing. The RAM 220 is a volatile memory functioning as an area for deploying a program executed by the CPU 210, and is used for storing or expanding programs and data. The ROM 230 is a non-volatile memory for storing such as programs and firmware to be executed by the CPU 210.

The memory 240 is a readable and writable non-volatile memory that stores operating system (OS) for operating the information processing apparatus 110, various software, setting information, or various data. Examples of the memory 240 include a hard disk drive (HDD) and a solid state drive (SSD).

The communication I/F 250 connects the information processing apparatus 110 and the network 130, so that the information processing apparatus 110 can communicate with other devices via the network 130. Communications via the network 130 may be either wired communications or wireless communications, and various data can be transmitted and received using a predetermined communication protocol such as a transmission control protocol/internet protocol (TCP/IP).

The display 260, which may be implemented by a liquid crystal display (LCD), displays various data, an operating state of the information processing apparatus 110, etc. to the user. The input device 270, which may be implemented by a keyboard or a mouse, allows the user to operate the information processing apparatus 110. The display 260 and the input device 270 may be separate devices, or may be integrated into one device as in a case of a touch panel display.

The hardware configuration of the information processing apparatus 110 of the present embodiment has been described above. The hardware configuration illustrated in FIG. 2 is merely one example of the embodiments, and the information processing apparatus 110 may have a hardware configuration other than the one described above. For example, when being the image forming apparatus 110b, the information processing apparatus 110 may include a printer and a scanner, and when being the smartphone terminal 110c, the information processing apparatus 110 may include a camera, a microphone, and a speaker. The information processing apparatus 110 may include a card reader for performing login authentication of a user.

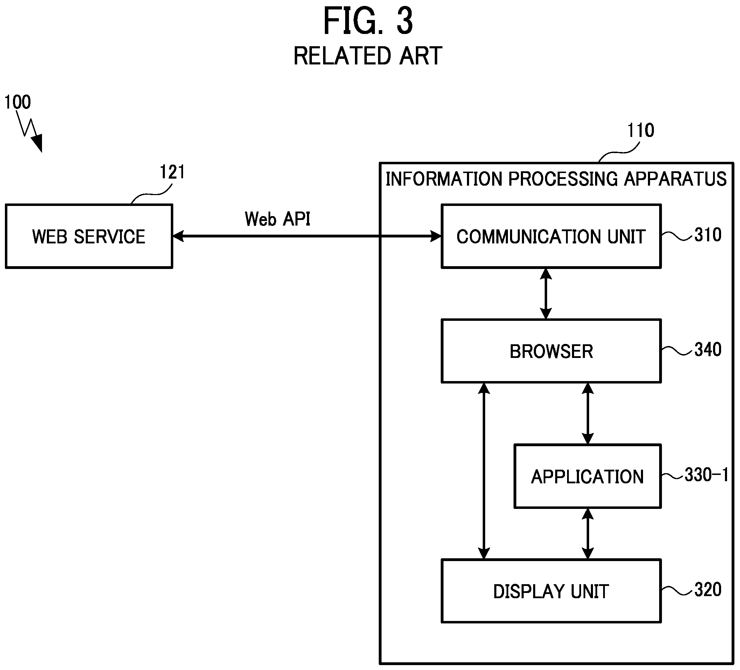

In the description of the present embodiment, the information processing apparatus 110 that executes a Web API by a related art is given. FIG. 3 is a block diagram illustrating execution of the Web API in the information processing apparatus 110, which is a general-purpose information processing apparatus, according to a related art.

As illustrated in FIG. 3, the information processing apparatus 110 that executes the Web API in the typical related art includes a communication unit 310, a display unit 320, an application 330-1, and a browser 340.

The communication unit 310 is a unit or means for controlling the operation of the communication I/F 250 and connecting the information processing apparatus 110 and a web service 121. The communication unit 310 can transmit and receive various types of data to and from the server 120 that provides the web service 121, and in particular, can call the Web API in response to a request from the browser 340 of which a description is given later.

The display unit 320 is a unit or means for controlling the operation of the display 260 and displaying various types of information on a screen. The display unit 320 can display, for example, a screen related to the application 330-1, a screen of a web page by the browser 340, and a Web API, for example.

The application 330-1 is software that executes predetermined processing on the information processing apparatus 110. An example of the application 330-1 is user authentication processing in cooperation with a cloud service.

The browser 340 is software that reads and processes hypertext markup language (HTML) data acquired from the network 130 via the communication unit 310. In addition, the browser 340 can call the web service 121 to use the Web API.

In the typical related art, the Web API is called from a client (information processing apparatus 110) to the web service 121. Even in a case of a Web API based on a specific programming language, if the browser 340 supports the programming language, the Web API can be called and executed. For example, when a JAVASCRIPT-based Web API may be used, the browser 340 on WINDOWS 10 that supports JAVASCRIPT can call and execute the Web API.

However, in a case of the information processing apparatus 110 in which an OS or a browser, alone, that does not support the language of the Web API is installed, the call of the Web API as described above is not successfully performed. For example, a smartphone installed with ANDROID or IOS fails to execute a specific JAVASCRIPT-based Web API, and fails to call the Web API from the browser 340 unlike the operation illustrated in FIG. 3.

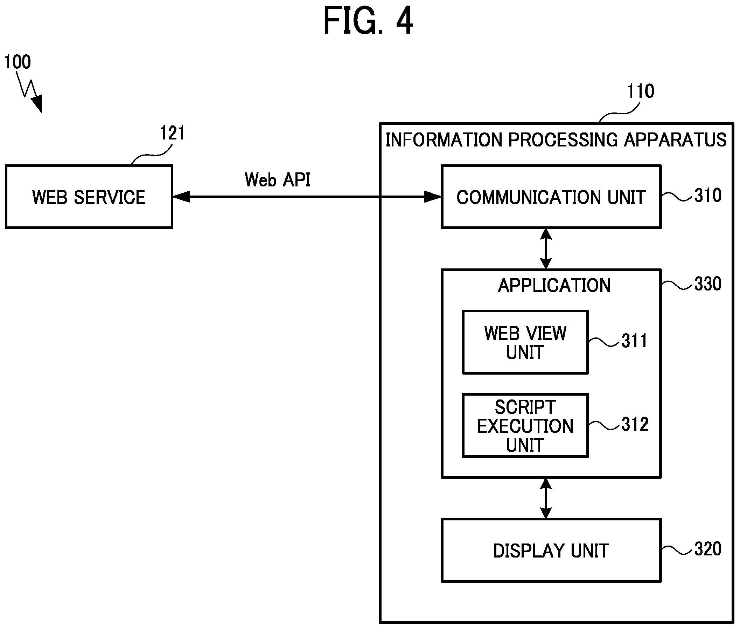

In the present embodiment, a WebView function of the application 330-1 is extended to call the Web API. Software blocks of the information processing apparatus 110 according to the present embodiment is described below with reference to FIG. 4. FIG. 4 is a schematic block diagram illustrating functions implemented by software in the information processing apparatus 110 according to the present embodiment.

As illustrated in FIG. 4, the information processing apparatus 110 according to the present embodiment includes functional modules of the communication unit 310, the display unit 320, and an application 330. Since the communication unit 310 and the display unit 320 illustrated in FIG. 4 are substantially the same as those of the related art described with reference to FIG. 3, and a detailed description thereof is omitted.

The application 330 is software that executes predetermined processing on the information processing apparatus 110, and can execute processing in response to an operation by a user, for example. The application 330 according to the present embodiment includes a WebView unit 331 and a script execution unit 332.

The WebView unit 331 is a functional unit or means implemented in the application 330 for displaying and browsing Web pages such as HTML content. The WebView unit 331 reads HTML data acquired via the communication unit 310 and displays details of the content on the display unit 320. The WebView unit 331 according to the present embodiment is implemented by JAVA or SWIFT, for example, and can perform a call of a Web API and receive a response, for example. In the present embodiment, by embedding specific JAVASCRIPT in the WebView unit 331, even an OS that does not support for executing a specific JAVASCRIPT-based Web API can handle the specific JAVASCRIPT-based Web API.

The script execution unit 332 is a unit or means for reading implementation of a script when a specific response is received from the Web API provided by the web service 121. The script execution unit 332 receives a response from the Web API via the WebView unit 331, and executes the Web API. A term "Script execution" in the script execution unit 332 is used for the name for convenience, and the processing executed by the function unit is not limited to a scripting language.

The software block described above corresponds to functional units that are implemented by the CPU 210 executing a program of the present embodiment to function each hardware component of the information processing apparatus 110. Each of the above-described functional units of the information processing apparatus 110 may be implemented by software, hardware, or a combination of software and hardware.

The software blocks in FIG. 4 are illustrated for convenience of explanation, and the application 330 may not necessarily include the script execution unit 332. As an example of another embodiment, the information processing apparatus 110 may have a configuration in which the script execution unit 332 is implemented in the browser 340 in which an extended API such as WebView is prepared.

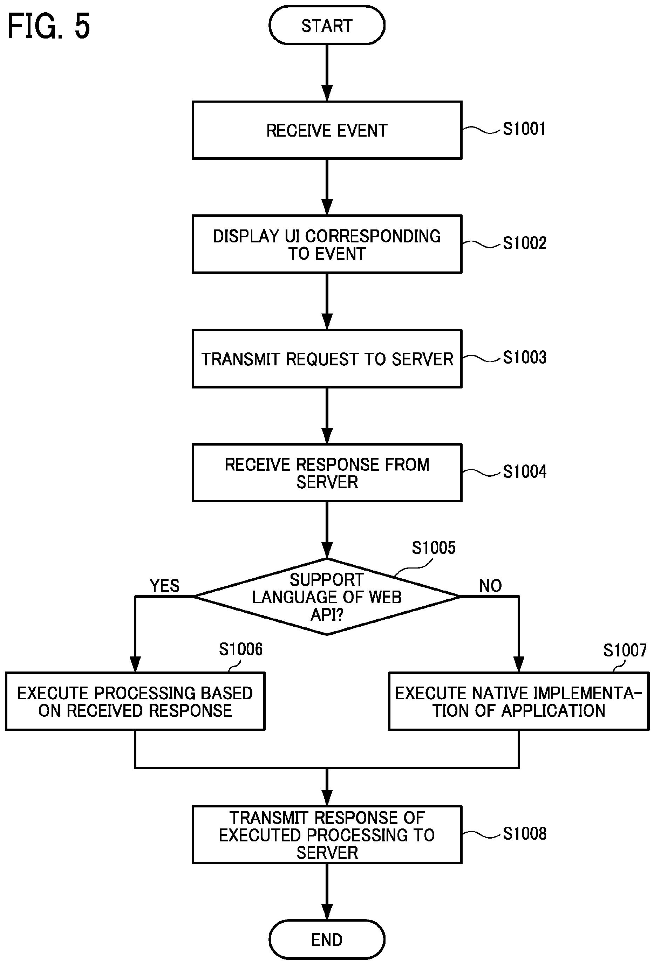

A description of a process performed by the information processing apparatus 110 is given below with reference to FIG. 5. FIG. 5 is a flowchart illustrating a process in which the information processing apparatus 110 executes the Web API according to the present embodiment. The process illustrated in FIG. 5 is mainly executed by the application 330.

In the following description of the embodiment, a case where a JAVASCRIPT-based Web API for performing challenge and response authentication using an authentication card is called from the web service 121 and executed is given as an example. Accordingly, in the example of the present embodiment, the application 330 is software that performs card authentication, and the script execution unit 332 is set so as to read the Java/Swift implementation of the application when a specific JAVASCRIPT response is received (in other words, JAVASCRIPT is set in the WebView unit 331). However, the present embodiment is an example, and the disclosure is not limited to the present embodiment. Accordingly, for example, the Web API may not be JAVASCRIPT-based, and may perform processing other than the challenge and response authentication using an authentication card. In addition, although a specific OS is not assumed in the present embodiment, as an example, an OS that can execute JAVASCRIPT on Runtime can be applied to the present embodiment.

The information processing apparatus 110 starts the process. In step S1001, the application 330 receives an event related to the process. In the example of the present embodiment, the application 330 receives an event that the user has performed an operation of holding an authentication card over the information processing apparatus 110 in order to log in to the web service 121.

Next, in step S1002, the application 330 displays a user interface (UI) corresponding to the event. In the example of the present embodiment, a sign-in screen is displayed for logging into web service 121.

Then, in step S1003, the WebView unit 331 transmits a login request to the Web service 121. Subsequently, in step S1004, the WebView unit 331 receives a JAVASCRIPT response to the request from the web service 121. In the example of the present embodiment, the response received in step S1004 is a challenged response.

Next, in step S1005, the process branches depending on whether a browser of the information processing apparatus 110 supports the language of the Web API or not. If the browser of the information processing apparatus 110 supports the language of the Web API (YES), the process proceeds to step S1006. In step S1006, since the browser supports the language of the Web API, processing based on the received response can be executed. Then, in step S1008, a response of the executed JAVASCRIPT is transmitted to the web service 121. Then, in step S1009, the information processing apparatus 110 ends the process.

On the other hand, in step S1005, when the language of the Web API is not supported (NO), the process proceeds to step S1007. In the example of the present embodiment, since the information processing apparatus 110 does not support JAVASCRIPT, the process proceeds to step S1007.

In step S1007, the script execution unit 332 executes JAVASCRIPT, and executes native implementation (Java Swift) of the application 330, namely, processing for generating a result of the Web API. Note that "native" in the description of the embodiment refers to a language that can be interpreted on the OS, and is synonymous with Java and Swift in the example of the present embodiment. In step S1007 in the example of the present embodiment, the script execution unit 332 executes logic to hash user information based on challenge and then passes the hashed result to JAVASCRIPT in a JAVASCRIPT Object Notation (JSON) format.

Then, in step S1008, a response of the executed JAVASCRIPT is transmitted to the web service 121. Then, the information processing apparatus 110 ends the process.

By the above-described process, even in the information processing apparatus 110 on which an OS or a browser that does not support the language of the Web API is installed, the Web API can be called and used as processing in the application 330.

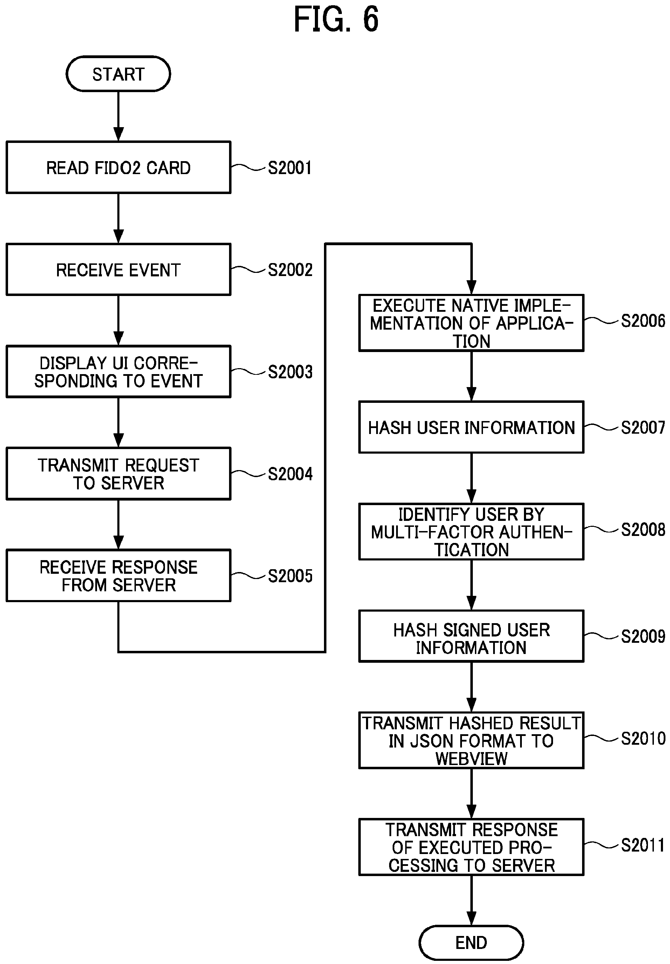

Next, a specific example to which the present embodiment is applied to is described with reference to FIG. 6.

FIG. 6 is a flowchart illustrating a process in which the information processing apparatus 110 executes the Web API in the specific example according to the present embodiment. The specific example illustrated in FIG. 6 illustrates an example in which an authentication process is performed by fast identity online (FIDO) 2 method, but the embodiment is not particularly limited. In the following description regarding FIG. 6, the substantially same processing as that described with reference to FIG. 5 is omitted as appropriate.

The information processing apparatus 110 starts the process. Then, in step S2001, a FIDO2 card is held over the information processing apparatus 110 in order to log in to the web service 121. Next, in step S2002, the event of step S2001, namely, the fact that the operation of holding the FIDO2 card over the information processing apparatus 110 has been performed is received.

Next, the information processing apparatus 110 performs processing of steps S2003 to S2005. Since the processing of steps S2003 to S2005 correspond to the processing of steps S1002 to S1004 in FIG. 5, the description thereof is omitted.

Next, the information processing apparatus 110 performs step S2006. Since step S2006 is processing corresponding to that of step S1007 in FIG. 5, description thereof is omitted. Although the description is omitted for convenience of explanation, it should be noted that branch processing corresponding to step S1005 in FIG. 5 is performed as a premise of performing the processing of step S2006.

Then, in step S2007, the application 330 executes logic to hash the user information based on the challenge. Next, in step S2008, whether the user is an authorized user is identified by multi-factor authentication.

After the user is identified as one being the authorized user in step S2008, logic is executed in step S2009 to hash the user information that is identified and signed based on the challenge. Then, in step S2010, a result of hashing the JAVASCRIPT is passed in JSON format.

Next, in step S2011, a response of the executed JAVASCRIPT is transmitted to the web service 121. The processing of step S2011 is substantially the same as the processing of step S1008 in FIG. 5. Then, the information processing apparatus 110 ends the process.

According to the above-described process, in the information processing apparatus 110 in which an OS or a browser that does not support the language of the Web API is installed, the Web API that performs authentication processing by the FIDO2 method can be called and used.

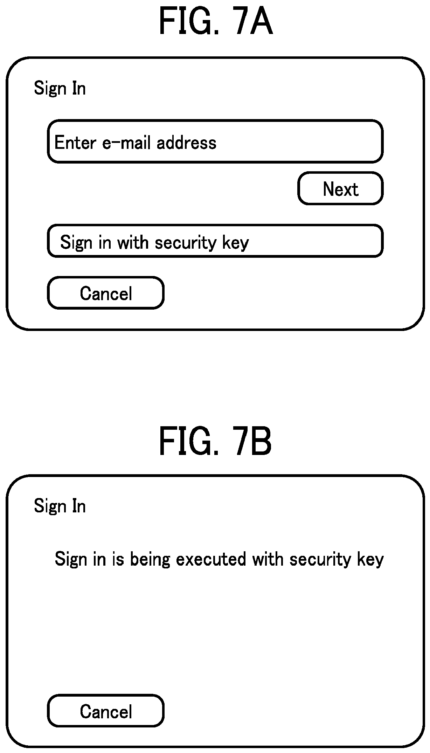

A description is given below of an example of a UI of the application 330 in the process illustrated in FIG. 6 with reference to FIG. 7. FIG. 7A and FIG. 7B are diagrams each illustrating an example of a display screen in the specific example according to the present embodiment.

FIG. 7A illustrates an example of a start screen of the authentication processing illustrated in FIG. 6. By selecting "Sign in with security key" on the screen illustrated in FIG. 7A, the process of FIG. 6 is started.

Then, in step S2001 of FIG. 6, when the user holds the FIDO2 card over, the screen transitions to the screen illustrated in FIG. 7B. After that, in a background where the screen illustrated in FIG. 7B is being displayed, the processing illustrated in FIG. 6 (processing after step S2002) is executed.

Although the embodiment in which the Web API is executed has been described above, an API in a broader sense may be used. For example, the present embodiment can be applied to a specific language-based (for example, JAVASCRIPT-based) library or Software Development Kit (SDK).

Further, in the above-present embodiment, the function is extended by introducing the script execution unit into the application, but the embodiment is not limited to the application, and, for example, a function corresponding to the script execution unit may be introduced into a browser in which an expansion API such as WebView is prepared. By doing so, even if the OS does not support the language of the Web API, the Web API can be used by implementing the extension of the browser.

According to the above-described embodiment of the present disclosure, an information processing apparatus, a method, and a program that can use an API without depending on an OS or a browser are provided.

Each of the functions of the above-present embodiments of the present disclosure can be implemented by a device-executable program written in, for example, C, C++, C#, and JAVA. The program according to an embodiment of the present disclosure can be stored in a device-readable recording medium to be distributed. Examples of the recording medium include a hard disk drive, a compact disk read only memory (CD-ROM), a magneto-optical disk (MO), a digital versatile disk (DVD), a flexible disk, an electrically erasable programmable read-only memory (EEPROM), and an erasable programmable read-only memory (EPROM). The program can be transmitted over a network in a form with which another computer can execute the program.

Each of the functions of the present embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), and field programmable gate array (FPGA), and conventional circuit components arranged to perform the recited functions.

Although several embodiments of the present disclosure have been described above, embodiments of the present disclosure are not limited to the above-present embodiments, and various modifications may be made without departing from the spirit and scope of the present disclosure that can be estimated by skilled person. Such modifications exhibiting functions and effects of the present disclosure are included within the scope of the present disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus (110) comprising:
a means for executing (330, 220, 230, 240) an application having a WebView function, and an operating system (OS) supporting a programming language other than a specific programming language;
a means for communicating (310, 210, 250) with a server (120) that provides an application programming interface (API) that is based on the specific programming language; and
a means for reading (330, 312, 210) native implementation of the application in response to the means for communicating (310, 210, 250) receiving a response from the API.

2. The information processing apparatus (110) of claim 1, wherein
the API is one of a Web API, a library, and a software development kit.

3. The information processing apparatus (110) of any one of claims 1 and 2, further comprising
a means for executing (330, 210) the application to perform login authentication based on a fast identity online 2 method.

4. The information processing apparatus (110) of any one of claims 1 to 3, wherein
the specific programming language includes a scripting language.

5. The information processing apparatus (110) of any one of claims 1 to 4, wherein
the OS is one of ANDROID and IOS, and
the API is a JAVASCRIPT-based Web API.

6. A method performed by an information processing apparatus (110) on which an application having a WebView function and an operating system (OS) supporting a programing language other than a specific programing language are installed, the method comprising:
receiving (S1004, S2005) a response from an API that is based on the specific programming language unsupported by the OS that is installed; and
reading (S1007, S2006) native implementation of the application in response to receiving the response.

7. A computer program having a WebView function, when being executed by a computer system (110) installed with an operating system (OS) supporting a programming language other than a specific programing language, causes the computer system (110) to perform a method comprising:
receiving (S1004, S2005) a response from an API that is based on the specific programming language unsupported by the OS that is installed; and
reading (S1007, S2006) native implementation of the program in response to receiving the response.

8. A recording medium storing an application having a WebView function, when being executed by a computer system (110) installed with an operating system (OS) supporting a programming language other than a specific programing language, causes the computer system (110) to perform a method comprising:
receiving (S1004, S2005) a response from an API that is based on the specific programming language unsupported by the OS that is installed; and
reading (S1007, S2006) native implementation of the application in response to receiving the response.
